# EUROPEAN PATENT APPLICATION

(11) **EP 0 631 937 A2**
(43) Date of publication of application: **04.01.1995**
(21) Application number: 94201735.1
(22) Date of filing: 17.06.1994
(51) Int. Cl.: B65D 1/22, B65D 5/18, B60R 11/02

(54) **Box-shaped body and the construction of it**

(30) Priority: 30.06.1993 NL 9301140
(71) Applicant: Netherlands Car B.V., NL-5708 HN Helmond (NL)
(72) Inventor: Van Doorn, Antonius Nicolaas Maria, NL-5708 AP Helmond (NL)
(74) Representative: Timmermans, Anthonius C.Th., Ir.

(57) **Abstract**

In a method for the composition of a box-shaped body (2), the assumption is made of a flat expansion of the box-shaped body, which expansion is constructed as a coherent entity of walls (3-6) which are movable with respect to each other, whereupon the walls (3,5,6) are folded and the box-shaped body (2) is formed. The edges of the walls are thereby brought together and affixed to each other by means of gluing with, preferably, a two-component glue. The flat expansion of the box-shaped body (2) is usually made by means of the injection moulding of a plastic material.

The box-shaped body (2) which is constructed in accordance with this method has walls which stand perpendicularly with respect to each other, a fact which makes the box-shaped body particularly suitable for use in a car for the fitting of accessories such as audio equipment, car radios, cassette players, etc. A vibration-free fitting without additional aids is simplified by the perpendicular running of the walls.

## Description

The current invention pertains to a method for the composition of a box-shaped body in addition to a box-shaped body constructed in accordance with the method.

In a known method for the preparation of the box-shaped body, the body or components thereof intended for subsequent assembly are constructed with the aid of a mould. Because the box-shaped body must be easily removable from the mould, the walls thereof run in a direction slightly convergent towards each other, leading to a situation which is undesirable, for example, in the application as a holder for components to be placed in the box-shaped body. In particular in the application as a holder for accessories in a vehicle, as a result of the non-perpendicular walls, additional measures must be taken to prevent the annoying audible vibration or movement of the accessories in the box-shaped body.

In that application of the box-shaped body, whereby the walls thereof must be equipped with holes, ridges or grooves, the known method for the construction thereof is complex because, in that case, movable sleeves or partitions must be applied in the mould.

An aim of the current invention is to provide a less complicated method and a box-shaped body suitable for several applications.

To that end, and in accordance with the invention, the assumption is made of a flat expansion of the box-shaped body, which expansion is constructed as a coherent entity of walls which are movable with respect to each other, whereupon the walls are folded and the box-shaped body is formed.

An advantage of the method in accordance with the invention is that, during the construction of the box-shaped body, it is no longer necessary to make use of partitions which are moved in/out respectively of the mould for the forming of the ribs, grooves, holes and the like in the walls of the box-shaped body. On the basis of the construction of the flat expansion, the partitions can be formed rigidly in the mould, whereby the construction process becomes simpler, faster and less expensive to implement.

In a preferential embodiment, the method in accordance with the invention comprises the forming of the box-shaped body by means of gathering the edges of the walls until the desired box form arises, subsequent to which the box pre-formed in this manner can be placed in its destination, which destination can be, for example, the central console in a car. The box is held in position and in shape by means of self-tapping screws, rivets or the like, which connect the box to the console. The box can also be kept in shape by means of click-joints (pin/hole) or clamps.

Furthermore, it to be preferred that the box-shaped body be constructed by means of the injection moulding of, for example, a light-weight plastic.

In this manner, the box-shaped body constructed in accordance with the invention has walls which stand perpendicularly with respect to each other.

An advantage hereof is that, in particular in a vehicle, the fitting of accessories such as audio equipment (for example, car radios, cassette players, boosters, etc), ashtrays and bins, cassette storage boxes, panel instruments, etc, is simplified. A vibration-free fitting without additional aids is greatly simplified by the perpendicular running of the walls.

By, in accordance with a further embodiment of the box-shaped body, equipping the box-shaped body with a frame on the sole open side, the rigidity is strongly improved as a result of the walls' being held together at the location of the opening. Furthermore, such a frame improves the overall appearance, a fact which is of general importance in the application of the box-shaped body as an accessory-holder in a vehicle such as a car.

With a view to the necessarily-low inherent weight of the box-shaped body for application in vehicles, a box-shaped body comprised of plastic and in particular polypropylene is to be preferred.

The invention shall be further elucidated on the basis of the accompanying drawing, within whose component figures components are depicted with the same reference numbers. Thereby:
Figure 1 depicts the flat expansion of a box-shaped body in accordance with the invention on the basis of which the method in accordance with the invention shall be further elucidated; and
Figure 2 depicts the end-form of the box-shaped body in accordance with the invention.

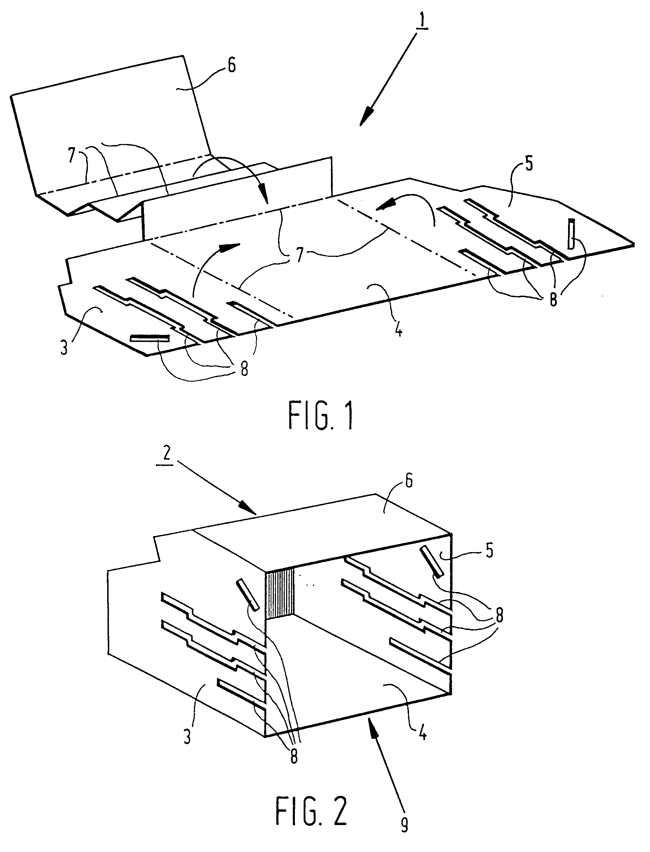

Figure 1 depicts a flat expansion 1 of the end-product depicted in figure 2 in the form of the box-shaped body 2. The flat expansion 1 is constructed as a coherent entity of walls which are movable with respect to each other. Construction takes place by injection moulding, for example. The material from which the flat expansion 1 is to be fabricated shall, in general, contain a plastic, which plastic is preferably the easily processed and generally obtainable polypropylene. The walls 3, 4, 5, and 6 can be formed into the box-shaped body 2 depicted in figure 2 by means of folding along folding-lines depicted by the reference number 7. Along the newly formed connecting lines, neighbour walls can be fixed to each other by means of gluing, for example; preferably with the aid of a strong glue (for example, two-component glue).

In the drawing, some ribs, ridges, grooves and holes 8 are depicted, which objects can be easily constructed with the aid of the method which assumes the fabrication as a whole of the flat expansion 1 by means of a mould.

The box-shaped body 2 has an open side 9, which, for purposes of adding rigidity, can be equipped with a non-depicted frame.

## Claims

1. Method for the composition of a box-shaped body (2), whereby a flat expansion (1) of the box-shaped body (2) is constructed as a coherent entity of walls (3-6), which walls (3-6) are movable with respect to each other, whereupon the walls (3-6) are folded and the box-shaped body (2) is formed.

2. Method in accordance with claim 1, whereby the box-shaped body (2) is formed by bringing the walls (3-6) together and fixing them to each other.

3. Method in accordance with claim 1 or 2, whereby the box-shaped body (2) is formed by gluing, melting or the mechanical connection of the walls (3-6) and/or the edges.

4. Method in accordance with claim 3, whereby, for the purposes of gluing, use is made of a two-component glue.

5. Method in accordance with one of the claims 1-4, whereby the box-shaped body (2) is constructed from a plastic material.

6. Method in accordance with one of the claims 1-5, whereby the box-shaped body (2) is constructed by means of an injection moulding process.

7. Method in accordance with claim 1, whereby the box-shaped body (2) is formed by bringing the edges of the walls (3-6) together and fixing them to an enclosing box.

8. Box-shaped body constructed in accordance with the method of one of the claims 1-7, chose walls (3-6) stand perpendicularly with respect to each other.

9. Box-shaped body in accordance with claim 8, whereby the box-shaped body (2) is open on one side and is equipped with a frame on that open side.

10. Box-shaped body in accordance with claim 8 or 9, composed of a material which contains plastic, metal, paper and/or cardboard.

11. Box-shaped body in accordance with claim 10, whereby the plastic is polypropylene.
